# EUROPEAN PATENT APPLICATION

(11) **EP 1 304 398 A2**
(43) Date of publication of application: **23.04.2003**
(21) Application number: 02022025.7
(22) Date of filing: 01.10.2002
(51) Int. Cl.: C23F 11/18, C09K 5/04, F25B 47/00

(54) **Corrosion inhibitor for ammonia/water absorption systems**

(30) Priority: 18.10.2001 IT MI20012176
(71) Applicant: Robur S.p.A., 24040 Verdellino/Zingonia (BG) (IT)
(72) Inventor: Guerra, Marco, 24129 Bergamo (IT)
(74) Representative: Frignoli, Luigi

(57) **Abstract**

A corrosion inhibitor for ammonia/water absorption circuits for heat pumps and refrigerators in which the operating fluid is an ammonia/water solution, the inhibitor being added to said solution and comprising zinc borate in mixture with a buffer formed from potassium hydroxides and nitrates.

## Description

The present invention relates to a corrosion inhibitor for use in ammonia/water absorption systems, and also relates to the composition utilizing the inhibitor for use as the operating fluid in such systems, and to the method for preventing corrosion and hydrogen formation in the circuits of ammonia/water absorption systems.

Ammonia/water absorption systems typically consist of refrigerators or heat pumps. Modern absorption refrigerators are described in US-A-5490393 and in the ASHRE Handbook - Fundamentals, 1989, pages 1.24, 1.25, 1.26.

The internal surfaces of hermetically sealed hydrogen/water absorption systems are known to require protection from corrosion due to the presence of the ammonia/water solution and its vapour, the temperature of which can reach 230°C.

If they were not protected by a suitable inhibitor, those metal surfaces which undergo corrosion would give rise the production of hydrogen. The presence of incondensable gases reduces refrigerator efficiency and such gases would have to be periodically discharged, with an unsustainable maintenance cost. Moreover serious corrosion effects would occur in the interior of the circuits which would also result in the formation of residues (typically magnetite) which, over a time period varying from a few tens to a few thousands of hours of operation, would cause both blockage of narrow passageways within the circuits, such as the throttling members of the refrigeration cycle (restrictors, capillary tubes), and the formation of holes in the circuit walls with consequent leakage of the solution and of the refrigerant. As a consequence, the aforesaid situations lead to shutdown of the machine of which the system forms part.

To evaluate the effectiveness of an inhibitor, the quantity of incondensable gases (typically hydrogen) produced during the operation of a refrigerator is measured; the value of this measurement is an indication of the degree of corrosion within the circuit.

To remedy the stated problems inhibitors are used which, when added to the ammonia/water solution used in the absorption cycle, reduce to a minimum the amount of developed incondensable gases produced during the entire life of the machine of which the circuit forms part.

The inhibitor currently used in ammonia/water absorption cycles is formed from sodium hydroxide and sodium chromate; this latter, containing hexavalent chromium, is carcinogenic and is subject to increasingly restrictive personnel and environmental protection regulations. Moreover, in an ammonia/water absorption refrigerator, which has the advantage of an ODP = 0 and a GWP = 0 because it does not use those substances such as HFCs, HCFCs or other gases with ODP > 0 or GWP > 0 normally used in compression refrigerators, the sodium chromate inhibitor is the only environmentally critical element. It should also be noted that the disposal cost for the residual inhibitor liquid within a circuit must also be taken into consideration, a non-noxious inhibitor also representing a saving in this respect.

The current search for inhibitors is concentrated particularly on the use of substances which are as little critical as possible from an environmental viewpoint.

US-A-2580983, US-A-5342578, US-A-5547600, US-A-5811026 and US-A-6203718 describe various compositions for use as corrosion inhibitors.

Generally the effectiveness tests on inhibitors are simulated in vessels in which a sample of the metal to be tested, typically carbon steel, is brought to a similar temperature and pressure to those at the critical points of the absorption cycle, it is then left under these conditions, measuring the corrosion gases which develop, and finally the sample surface is also analyzed. Simulation vessels are used for cost reasons, so that an entire machine incorporating an absorption cycle does not have to be used, often for thousands of hours, at each test on a new inhibitor.

Experience gained during years of tests conducted by the company Robur (assignee of US-A-54900393 and manufacturer of ammonia/water absorption circuits) both on test vessels and on actual machines incorporating an absorption cycle has lead to the conclusion that there is no simple relationship between tests carried out in simulation vessels and those under rear machine conditions. Generally, good behaviour of an inhibitor in simulation vessels does not imply that it will operate well on a real machine. Tests on simulation vessels can therefore be only used as preliminaries to select families of products to be tested.

Consequently the inhibitors according to the present invention were tested on machines incorporating an ammonia/water absorption cycle (specifically on those machines described in US-A-5490393) and not on simulation vessels. The known inhibitors and those described in the aforesaid previous USA patents were also tested on real machines, with the discovery that they are much less effective than the inhibitors claimed herein.

The tests (to which the following examples refer) consist of operating series-produced absorption refrigeration machines (the Robur model ACF60-00 in this specific case) in refrigeration and air conditioning plants operating on site under real conditions. On the machines operating in these plants, measurements were taken of the number of effective hours of operation with periodic withdrawals from one of the service valves of the incondensable gases produced (millilitres of gas produced per number of hours of operation). Any operating abnormalities were also noted and on termination of each test the machines were emptied, sectioned, and the surfaces typically exposed to most corrosion examined.

The incondensable gas measurements were referred to standard atmospheric pressure of 1013.25 mbar or less and to a temperature of about 20°C.

Analysis of the incondensable gases showed the presence of hydrogen and nitrogen (plus negligible traces of other gases). As already stated the hydrogen is a direct consequence of the corrosion of the inner surfaces of the refrigeration circuit, whereas the nitrogen and a further hydrogen part originate from the splitting of the ammonia molecule when in certain situations, which can be brief and transient, extremely high temperatures exceeding 300-350°C are attained within the circuit.

In the light of the aforesaid, the present invention relates to a corrosion inhibitor for ammonia/water absorption systems, characterised by comprising a mixture of potassium hydroxide, potassium nitrate and zinc borate.

The invention also relates to a composition for use as the operating fluid for ammonia/water absorption circuits for heat pumps and refrigerators, comprising an ammonia/water solution and a mixture of zinc borate in a quantity between 0.4% and 1.2%, potassium hydroxide in a quantity between 0.8% and 3% and potassium nitrate in a quantity between 0.8% and 3%, the percentages being by weight on the weight of the water contained in said ammonia/water solution.

Finally the invention also relates to a method for inhibiting corrosion and hydrogen formation in the circuits of ammonia/water absorption heat pumps and refrigerators, characterised by adding to the ammonia/water solution a corrosion inhibitor comprising a mixture of zinc borate in a quantity between 0.4% and 1.2%, potassium hydroxide in a quantity between 0.8% and 3% and potassium nitrate in a quantity between 0.8% and 3%, the percentages being by weight on the weight of the water contained in said ammonia/water solution.

In the aforestated definitions and in the ensuing claims the term "solution" means a mixture of pure water and ammonia which is fed into the circuit of the absorption refrigeration machine. For example in the absorption machines used for testing the inhibitor the solution consisted of a mixture of 10 kg of water and 7 kg of ammonia. The calculation of the quantity of inhibitor to be added is made as a mass percentage on the mass of water alone.

It can be noted that the use of hydroxides is contemplated by many previous patents (for example US-A-5811026, US-A-6203718 and US-A-2580983), possibly with the addition of other substances, and has effectively been in use in commercial machines for more than 30 years.

The fundamental characterising component of the inhibitor according to the present invention is the zinc borate (2ZnO.3B₂O₃) which, in addition to a buffer consisting of potassium hydroxides and nitrates, has enabled surprising results to be obtained (whereas the presence of hydroxides alone gave no positive result when used in the ammonia/water solution in real machines).

In order to clarify the characteristics of the invention, some examples are described hereinafter and are compared with results obtained using known inhibitors.

### EXAMPLE 1

A composition is prepared for use as the operating fluid in an ammonia/water absorption refrigerator. The refrigerator used is identified and known commercially as the ROBUR model ACF60-00. The composition comprises 1% of KOH, 1% of KNO₃ and 0.9% of 2ZnO.3B₂O₃, the percentages being by weight on the weight of water contained in the refrigerator circuit. The results given in the following table were obtained:

| **Progressive days of operation** | **Progressive hours of operation** | **Incondensable gases measured** **(ml)** | **Incondensable gases / hour** **(ml/hour)** |
|---|---|---|---|
| 0 | 0 | 0 | 0 |
| 1 | 18 | 300 | 16.6 |
| 4 | 99 | 90 | 1.1 |
| 5 | 121 | 170 | 7.7 |
| 6 | 143 | 90 | 4.1 |
| 7 | 161 | 30 | 1.6 |
| 10 | 215 | 0 | 0 |
| 14 | 302 | 30 | 0.3 |
| 21 | 436 | 30 | 0.2 |
| 28 | 579 | 190 | 1.3 |
| 32 | 659 | 200 | 2.5 |
| 39 | 821 | 80 | 0.5 |
| 46 | 967 | 130 | 0.9 |
| 55 | 1111 | 100 | 0.7 |
| 62 | 1258 | 30 | 0.2 |
| 69 | 1404 | 20 | 0.1 |
| 76 | 1550 | 100 | 0.7 |
| 108 | 2223 | 90 | 0.1 |
| 142 | 2901 | 180 | 0.2 |
| 169 | 3563 | 90 | 0.1 |

If the refrigerator operation were to be continued, stable incondensable gas values around 0.1-0.2 ml/hour would be expected.
The difference in behaviour of an identical absorption refrigeration machine (Robur model ACF60-00) charged with H₂O-NH₃ without inhibitor is highlighted by the following results:

| **Progressive days of operation** | **Progressive hours of operation** | **Incondensable gases measured** **(ml)** | **Incondensable gases / hour** **(ml/hour)** |
|---|---|---|---|
| 0 | 0 | 0 0 | |
| 2 | 11 | 225 | 20.4 |
| 3 | 23 | 800 | 66.6 |
| 3 | 27 | 950 | 237.5 |
| 4 | 34 | 2200 | 317.1 |
| 5 | 40 | 1800 | 300 |
| 6 | 47 | 2300 | 328.5 |

The test was interrupted at this point.

### EXAMPLE 2

A ROBUR refrigerator model ACF60 was charged with an ammonia/water solution and 3% of KOH, 3% of KNO₃ and 1.2% of 2ZnO.3B₂O₃. Proceeding as in Example 1, a production rate of less than 0.5 ml/hour of incondensable gases was found during a test of about 6000 hours of operation.

### EXAMPLE 3

Proceeding in the manner indicated in Example 1 but charging the refrigerator with an ammonia/water solution and 1% of KOH, 1% of KNO₃ and 0.4% of 2ZnO.3B₂O₃, a production rate of less than 0.5 ml/hour of incondensable gases was found during a test of about 2500 hours of operation.

To highlight the differences in the results using inhibitors of known type on refrigerator machines operating under real conditions (in the same manner as Examples from 1 to 3), the following results were obtained.
Using a 38% ammonia/water solution with the addition of 5% of KOH on the water weight in a known refrigerator unit such as the ROBUR model ACD36-00 the experimental results were as follows:

| **Progressive days of operation** | **Progressive hours of operation** | **Incondensable gases measured** **(ml)** | **Incondensable gases / hour** **(ml/hour)** |
|---|---|---|---|
| 0 | 0 | 0 | 0 |
| 1 | 8 | 1350 | 168,7 |
| 2 | 2 | 4700* | 2350 |
| 2 | 2 | 1300 | 650 |
| 2 | 4 | 3700* | 925 |
| 3 | 2 | 1200 | 600 |
| 3 | 2 | 950 | 475 |
| 4 | 3 | 800 | 266 |
| 4 | 4 | 750 | 187 |
| 5 | 2 | 850 | 425 |

| | | | |
|---|---|---|---|
| * machine shutdown due to excess temperature | | | |

On charging a known refrigerator unit such as the ROBUR model ACF60-00 with an ammonia/water solution and an inhibitor consisting of 2% of KOH and 1% of KNO₃ on the water weight the following results were obtained:

| **Progressive days of operation** | **Progressive hours of operation** | **Incondensable gases measured** **(ml)** | **Incondensable gases / hour** **(ml/hour)** |
|---|---|---|---|
| 0 | 0 | 0 | 0 |
| 1 | 4 | 50 | 12.5 |
| 2 | 2 | 250 | 125 |
| 3 | 7 | 650 | 92 |
| 8 | 45 | 1750 | 38.9 |
| 13 | 45 | 2200 | 48.8 |
| 23 | 90 | 17000* | 188.8 |
| 47 | 210 | unit shutdown, solution leakage from generator | |

| | | | |
|---|---|---|---|
| * machine shutdown due to excess temperature | | | |

At the end of the test, the unit was sectioned for corrosion inspection.

## Claims

1. A corrosion inhibitor for ammonia/water absorption systems. **characterised by** comprising a mixture of potassium hydroxide, potassium nitrate and zinc borate.

2. A composition for use as the operating fluid for ammonia/water absorption circuits for heat pumps and refrigerators, comprising an ammonia/water solution and a mixture of zinc borate in a quantity between 0.4% and 1.2%, potassium hydroxide in a quantity between 0.8% and 3% and potassium nitrate in a quantity between 0.8% and 3%, the percentages being by weight on the weight of the water contained in said ammonia/water solution.

3. A method for inhibiting corrosion and hydrogen formation in the circuits of ammonia/water absorption heat pumps and refrigerators, **characterised by** adding to the ammonia/water solution a corrosion inhibitor comprising a mixture of zinc borate in a quantity between 0.4% and 1.2%, potassium hydroxide in a quantity between 0.8% and 3% and potassium nitrate in a quantity between 0.8% and 3%, the percentages being by weight on the weight of the water contained in said ammonia/water solution.
